# EUROPÄISCHE PATENTANMELDUNG

(11) **EP 1 241 083 A2**
(43) Veröffentlichungstag der Anmeldung: **18.09.2002**
(21) Anmeldenummer: 02005569.5
(22) Anmeldetag: 12.03.2002
(51) Int. Cl.: B62D 25/10, B62D 29/04

(54) **Motorhaube aus Kunststoff, insbesondere für Traktoren**

(30) Priorität: 12.03.2001 DE 20104365 U
(71) Anmelder: FA. Oskar Braunsberger, 87719 Mindelheim (DE)
(72) Erfinder: Braunsberger, Oskar, 87719 Mindelheim (DE)
(74) Vertreter: Fiener, Josef

(57) **Zusammenfassung**

Zur Schaffung einer einfach und preiswert herzustellenden Motorhaube (1) aus Kunststoff, insbesondere für Traktoren, mit Seitenteilen (2) und einer Deckfläche (3) zur Abdeckung eines Motors, wird vorgeschlagen, daß die Seitenteile (2) und die Deckfläche (3) als im wesentlichen flächige Kunststoff-Bauteile ausgebildet sind und an zwei Teilungslinien (4) miteinander verbunden sind.

## Beschreibung

Die Erfindung betrifft eine Motorhaube aus Kunststoff, insbesondere für Traktoren, mit Seitenteilen und einer Deckfläche zur Abdeckung eines Motors.

Motorhauben aus Kunststoff sind als Ersatz für aufwendig zu fertigende Blech-Motorhauben bereits bekannt, insbesondere um die aufwendige Herstellung aus Stahlblech zu vereinfachen. Jedoch sind die bereits bekannten Kunststoff-Motorhauben, insbesondere bei kleineren Stückzahlen noch relativ teuer, insbesondere wenn die Motorhauben aus glasfaserverstärktem Kunststoff im Laminierverfahren hergestellt werden. So müssen derartige Motorhauben beschliffen werden, um eine ausreichende Oberflächengüte für die nachfolgende Lackierung zu gewährleisten. Diese Arbeitsschritte sind jedoch aufgrund der erforderlichen manuellen Arbeiten sehr aufwendig und für eine industrielle Fertigung mit höheren Stückzahlen nicht geeignet.

Demzufolge liegt der Erfindung die Aufgabe zugrunde, eine Motorhaube aus Kunststoff zu schaffen, die mit einfachen Werkzeugen preiswert hergestellt werden kann und dabei ohne aufwendige manuelle Nacharbeiten eine ausreichende Oberflächenqualität und -stabilität aufweist.

Diese Aufgabe wird gelöst durch eine Motorhaube gemäß den Merkmalen des Anspruchs 1. Vorteilhafte Ausgestaltungen sind Gegenstand der abhängigen Ansprüche.

Durch die Ausbildung der Seitenteile und der Deckfläche als im wesentlichen flächige Kunststoff-Bauteile wird der Werkzeugaufwand zur Schaffung der haubenförmigen Kontur wesentlich verringert. Durch die Verbindung an den beiden Teilungslinien jeweils zwischen den Seitenteilen und der Deckfläche ergibt sich eine ausreichende Stabilität der Motorhaube. Von besonderem Vorteil ist hierbei die Ausbildung der Seitenteile und der Deckfläche als geschäumte Kunststoffteile, deren Oberfläche aus einem hochglänzenden, tiefgezogenen Kunststoff-Schichtfolie gebildet ist. Diese Schichtfolie wird in einfacher Weise in das Schäumwerkzeug eingelegt, so daß die Tragstruktur der Motorhaube geschäumt werden kann, wodurch sich eine innige Verbindung des Kunststoffschaumes mit der Kunststoff-Schichtfolie ergibt. Da letztere durchgefärbt ist, ergibt sich eine hochwertige, rostfreie Oberfläche der Motorhaube.

In bevorzugter Ausführungsform sind in die Seitenteile und/oder die Deckfläche Halterungsteile aus Metall miteingeschäumt, so daß eine stabile Verbindung an Scharnieren, Verriegelung und dergleichen erreicht werden kann. Ebenso können Stehbolzen, Kanalbegrenzungen, Gitter oder sonstige funktionelle Bauteile in die Motorhaube miteingeschäumt werden. Durch diese Möglichkeit der Umschäumung von Metall-Halterungsteilen in einem Arbeitsgang kann auch in die Deckfläche ein U-förmiger Bügel miteingeschäumt werden, an dessen nach unten ragenden Überständen die Seitenteile befestigt werden können.

Die Stabilität kann hierbei weiter erhöht werden, wenn eine Klebenut an der Teilungslinie vorgesehen ist, insbesondere benachbart zu der Teilungslinie mit den Metall-Halterungsteilen. Hierdurch wird ein besonders hohe Stabilität der Verbindung zwischen Seitenteilen und Deckfläche erreicht, die auch den rauhen Anforderungen von Gelände- oder Landwirtschaftstraktoren genügt. Weiterhin können an der Innenseite der Motorhaube auch Hitzeschutzmatten vorgesehen werden, um beispielsweise entlang des Auspuffrohres eine ausreichende Wärmeisolierung zu erzielen. Hierdurch kann die Motorhaube besonders eng an den Motor angepaßt werden. Zudem können in die Seitenteile Wölbungen für den Einschlag der Vorderachse miteingeformt werden, ebenso an der Unterseite der Seitenteile Halterungen zum Öffnen der Motorhaube oder Aufstiegshilfen und dergleichen.

Nachfolgend wird ein Ausführungsbeispiel der Motorhaube anhand der Zeichnungen näher erläutert und beschrieben. Hierbei zeigen:
- Fig. 1:: eine perspektivische Darstellung der Motorhaube;
- Fig. 2:: eine Seitenansicht auf ein Seitenteil mit aufgesetzter Deckfläche entlang der Teilungslinie; und
- Fig. 3:: eine vergrößerte Schnittdarstellung entlang der Teilungslinie der Motorhaube.

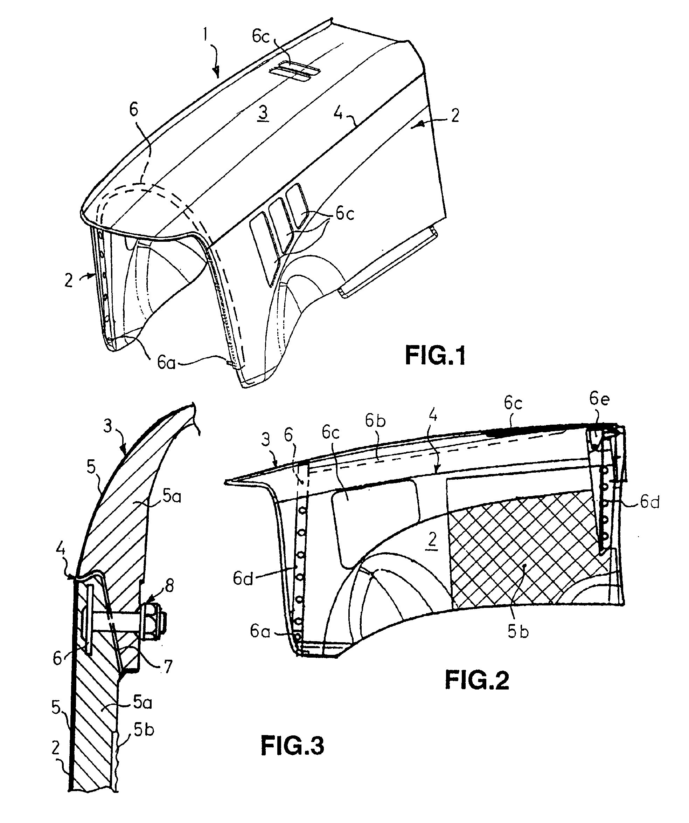

In Fig. 1 ist eine perspektivische Darstellung einer Motorhaube 1 aus Kunststoff dargestellt, die im wesentlichen aus zwei Seitenteilen 2 und einer Deckfläche 3 besteht. Die Seitenteile 2 und die diese verbindende Deckfläche 3 sind im wesentlichen als flächige Kunststoff-Bauteile ausgebildet und an zwei Teilungslinien 4 entlang der Haupterstreckung des nicht hier dargestellten Motors miteinander verbunden. Die beiden Seitenteile 2 und die Deckfläche 3 sind jeweils als geschäumte Kunststoffteile ausgebildet, wobei die Oberfläche aus einer hochglänzenden, tiefgezogenen Kunststoff-Schichtfolie 5 (vgl. Fig. 3) besteht. Diese Schichtfolie 5, insbesondere aus durchgefärbtem Polyethylen oder extrudiertem ABS wird in ein Schäumwerkzeug eingelegt und dieses mit Kunststoffschaum 5a hinterschäumt. Hierdurch ergibt sich ein inniger Verbund zwischen der Schichtfolie 5 und dem Kunststoffschaum 5a. Zudem können auch weitere Bauteile an der Innenseite der Motorhaube 1 miteingeschäumt werden, beispielsweise eine Hitzeschutzmatte 5b (vgl. Fig 2 und 3).

Desweiteren können in den Kunststoffschaum 5a der Seitenteile 2 und/oder der Deckfläche 3 Metall-Halterungsteile 6, insbesondere Stehbolzen 6a, Kanalbegrenzungen 6b oder Gitterdurchlässe 6c miteingeschäumt werden. Aus Fig. 1 ist in Strichpunktlinien ein bügelförmiger Verlauf eines derartigen Metall-Halterungsteiles 6 ersichtlich, das sich von der Deckfläche 3 ausgehend über seitliche Überstände 6d (vgl. Fig. 2) bis nach unten hin in den Bereich der Stehbolzen 6a erstreckt. Diese Stehbolzen 6a können beispielsweise zur Halterung eines vorderen Lüftungsgitters oder auch zur Scharnieranlenkung dienen. Entsprechendes gilt für ein schematisch dargestelltes Scharnier 6e am hinteren Bereich der Motorhaube 1 (vgl. Fig. 2), das ebenfalls an das Metall-Halterungsteil 6 mit den nach unten abstehenden Überständen 6d befestigt ist. Durch dieses bügelförmige Metall-Halterungsteil 6 am vorderen und am hinteren Ende der Motorhaube 1, können die beiden Seitenteile 2 besonders stabil mit der Deckfläche 3 verbunden werden. Die Stabilität wird zudem dadurch erhöht, daß entlang den zwei Teilungslinien 4 ebenfalls eine derartige Verbindung an Metall-Halterungsteilen 6 vorgesehen ist, wie dies in der Schnittdarstellung gemäß Fig. 3 dargestellt ist. Hierbei ist im oberen Bereich ein Metallband als Halterungsteil 6 im Kunststoffschaum 5a des Seitenteils 2 miteingeschäumt. Bei der Verbindung entlang der Teilungslinie 4 wird die Verbindung mittels einer Schraubverbindung 8 hergestellt. Der Verbund an der Teilungslinie 4 kann hierbei noch erhöht werden, wenn zwischen Deckfläche 3 und Seitenteil 2 eine im Querschnitt geschwungen verlaufende Klebenut 7 vorgesehen ist. Durch diese Verklebung werden die Schaumteile 5a der Deckfläche 3 und der beiden Seitenteile 2, insbesondere auch durch den Zusammenhalt mittels der Schraubverbindung 8 kraft- und formschlüssig miteinander verbunden.

Im unteren Bereich der Fig. 3 ist zudem die Einschäumung einer Hitzeschutzmatte 5b gezeigt, die gemäß der Darstellung in Fig. 2, beispielsweise im Bereich eines Motor-Auspuffrohres angeordnet ist, um die Auspuffhitze vom Kunststoffschaum 5a des Seitenteils 2 fernzuhalten. Insgesamt ergibt sich somit eine einfach herzustellende und zu montierende Motorhaube 1, die zudem eine besonders hohe Oberflächenqualität aufweist. Zudem können nahezu alle Funktionsteile und Halterungsteile mit in die Bauteile eingeschäumt werden, so daß sich nachträgliche Bearbeitungen in kostengünstiger Weise vermeiden lassen.

## Patentansprüche

1. Motorhaube aus Kunststoff, insbesondere für Traktoren, mit Seitenteilen (2) und einer Deckfläche (3) zur Abdeckung eines Motors,
**dadurch gekennzeichnet, daß**
die Seitenteile (2) und die Deckfläche (3) als im wesentlichen flächige Kunststoff-Bauteile ausgebildet sind und an zwei Teilungslinien (4) miteinander verbunden sind.

2. Motorhaube nach Anspruch 1,
**dadurch gekennzeichnet, daß**
die Seitenteile (2) und die Deckfläche (3) als geschäumte Kunststoffteile ausgebildet sind.

3. Motorhaube nach Anspruch 2,
**dadurch gekennzeichnet, daß**
die Oberfläche der Seitenteile (2) und der Deckfläche (3) aus einer hochglänzenden Kunststoffschichtfolie (5) gebildet ist, die in ein Schäumwerkzeug einlegbar ist.

4. Motorhaube nach einem der Ansprüche 1 bis 3,
**dadurch gekennzeichnet, daß**
die Seitenteile (2) und/oder die Deckfläche (3) innen mit einer Hitzeschutzmatte (5b) beklebt ist.

5. Motorhaube nach einem der Ansprüche 2 bis 4,
**dadurch gekennzeichnet, daß**
in die Seitenteile (2) und/oder die Deckfläche (3) Metall-Halterungsteile (6), insbesondere Stehbolzen (6a), Kanalbegrenzungen (6b) oder Gitter (6c) miteingeschäumt sind.

6. Motorhaube nach Anspruch 5,
**dadurch gekennzeichnet, daß**
das Metall-Halterungsteil (6) als Bügel ausgebildet ist, der nach unten hin überstehend in die Deckfläche (3) miteingeschäumt ist und an den nach unten ragenden Überstände (6d) die Seitenteile (2) befestigt, insbesondere verschraubt sind.

7. Motorhaube nach einem der Ansprüche 1 bis 6,
**dadurch gekennzeichnet, daß**
an den Teilungslinien (4) zwischen Deckfläche (3) und Seitenteilen (2) eine Klebenut (7) ausgebildet ist.

8. Motorhaube nach Anspruch 7,
**dadurch gekennzeichnet, daß**
die Klebenut (7) benachbart zu den Metall-Halterungsteilen (6) angeordnet ist.
